# EUROPÄISCHE PATENTSCHRIFT

(11) **EP 1 285 834 B1**
(45) Veröffentlichungstag und Bekanntmachung des Hinweises auf die Patenterteilung: **01.02.2006**
(21) Anmeldenummer: 02017781.2
(22) Anmeldetag: 12.08.2002
(51) Int. Cl.: B60T 13/52

(54) **Steuervorrichtung für Druckluftbremsen**
Control device for compressed-air brakes
Dispositif de contrôle pour freins à air comprimé

(30) Priorität: 13.08.2001 DE 10139773
(43) Veröffentlichungstag der Anmeldung: 26.02.2003
(73) Patentinhaber: KNORR-BREMSE Systeme für Schienenfahrzeuge GmbH, 80809 München (DE)
(72) Erfinder: Heller, Martin, 85716 Unterschleissheim (DE); Wenk, Benno, 85283 Wolnzach (DE); Sonntag, Stefan, 82024 Taufkirchen (DE)

(56) Entgegenhaltungen:
- DE-B- 1 108 257
- DE-C- 600 986
- DE-C- 816 410
- DE-C- 919 234
- FR-A- 1 054 327
- FR-A- 1 295 788
- GB-A- 751 070
- GB-A- 751 935
- NL-C- 77 519
- KNORR-BREMSE: "Gerätebeschreibung Steuerventil KEd" KNORR-BREMSE * Abbildungen 5,6 *

## Beschreibung

Die Erfindung betrifft eine Steuervorrichtung für Druckluftbremsen gemäß dem Oberbegriff des Anspruches 1.

Druckluftbremsen werden zum Beispiel bei Schienenfahrzeugen eingesetzt, wobei der Bremsvorgang durch Absenken des Druckes in einer Hauptluftleitung eingeleitet wird. Dies ist aus Sicherheitsgründen so vorgesehen, bedeutet aber, dass eine Steuervorrichtung erforderlich ist, die dafür sorgt, dass bei Drucksenkung in der Hauptluftleitung eine Druckerhöhung in den Bremszylindern stattfindet. Eine solche Steuervorrichtung wird zum Beispiel in EP 0 133 653 B1 beschrieben.

Aufgrund ihrer Komplexität erfordern solche Steuervorrichtungen eine bestimmte Baugröße. Wie zum Beispiel in der Beschreibung B-EC00.25, Bild 5 und 6 dargestellt, ist eine Steuerhülse 101.37, ein Mindestdruckbegrenzer F und ein Ü-Überwacher U mit der Ü-Kammer K vorgesehen. Dies sind drei Baugruppen, die zusammen einen bestimmten Bauaufwånd darstellen, wobei insbesondere die Lage der Steuerhülse in der Kolbenstange des Dreidruckorgans G die Größe des gesamten Steuerventils beeinflusst. Die Beeinflussung erfolgt einerseits direkt durch die Größe der Steuerhülse, welche sich auf die Höhe des Gehäuses auswirkt, aber auch indirekt, weil zur Betätigung der Steuerhülse und Überwindung der Reibung der durch die Steuerhülse bedingten, gleitenden Abdichtung eine bestimmte Größe des Membrantellers 101.21 erforderlich ist.

Der Erfindung liegt die Aufgabe zugrunde, eine Steuervorrichtung mit vermindertem Aufwand und in kleinerer Größe zu schaffen. Weiterhin soll durch die Steuervorrichtung, bei einem Einsatz für Zugbremsen, eine möglichst gleichzeitige und gleichmäßige Bremsung aller Wagen erreicht werden.
Diese Aufgabe wird erfindungsgemäß durch eine Vorrichtung mit den Merkmalen des Anspruches 1 gelöst. In den abhängigen Ansprüchen sind weitere vorteilhafte Ausführungen für eine nach der Erfindung ausgestaltete Steuervorrichtung beschrieben.

Die der Erfindung zugrundeliegende Idee ist, von den drei Baugruppen, Steuerhülse, Mindestdruckbegrenzer und Ü-Überwacher eine wegzulassen, ohne Einbußen in der Funktionalität zu erleiden. Überraschenderweise wird nämlich die Steuerhülse überflüssig, wenn es gelingt, die Hauptluftleitung zeitlich sinnvoll gesteuert zum Ventil V 101.2 zu verbinden. Die Steuerung dieser Verbindung erfolgt durch ein Ventil, dessen Position in etwa dem Mindestdruckbegrenzer F entspricht. Es ergibt sich die Notwendigkeit eines speziell ausgebildeten Steuerorgans, welches die Funktion des Ü-Überwachers und des A-Überwachers D der bekannten Steuervorrichtung In sich vereinigt.

Damit ist eine Verminderung der Baugröße gegenüber der bekannten Steuervorrichtung von etwa 50 Prozent erreichbar, ohne dass die Hysterese des Gerätes den üblichen Wert übersteigt.

Erfindungsgemäß ist die Steuervorrichtung mit einem Steuerventil, das in einem Gehäuse eine Kolbenstange mit zwei Kolben und ein Doppelsitzventil umfasst, ausgestattet. Weiterhin umfasst die Erfindung das schon erwähnte Steuerorgan, einen Vorratsluftbehälter, eine Steuerkammer und eine Hauptluftleitung. Eine Seite des ersten Kolbens ist druckluftführend mit der Hauptluftleitung und die andere Seite druckluftführend mit der Steuerkammer verbunden. Der zweite Kolben ist auf seiner einen Seite druckluftführend mit einer Bremszylindervorsteuerkammer verbunden, während auf der anderen Seite Umgebungsdruck herrscht. Die erfindungsgemäße Ausführung ist dabei nicht auf die Verschaltung mit einer Bremszylindervorsteuerkammer beschränkt, sondern es sind auch entsprechende druckluftleitende Verbindungen direkt mit einem Bremszylinder denkbar. Das Doppelsitzventil ist zwischen eine Druckluftverbindung von dem Vorratsluftbehälter und eine Druckluftverbindung zu der Bremszylindervorsteuerkammer geschaltet. Parallel zu der Druckluftverbindung von dem Vorratsluftbehälter zu dem Doppelsitzventil ist eine Druckluftverbindung mit dem schon erwähnten Ventil, das wiederum eine Kolbenstange und einen Kolben umfasst, geschaltet. Der Kolben weist auf der einen Seite einen Druckluftanschluss für einen Steuerdruck auf, und auf der anderen Seite ist eine Vorrichtung zum Erzeugen einer Gegenkraft vorgesehen, vorteilhaft in Form einer Druckfeder.

In die druckluftleitende Verbindungsstelle zwischen der Hauptluftleitung, der Steuerkammer, dem Druckluftanschluss für den Steuerdruck, der Bremszylindervorsteuerkammer und der Umgebung ist das Steuerorgan geschaltet.

Der zweite Kolben des Doppelsitzventils ist auf seiner zweiten Seite mit der Umgebung in der Art verbunden, dass bei einer unteren Stellung der Kolbenstange mit den beiden Kolben die Bremszylinderkammer über die Umgebungsverbindung entlüftet wird. Dabei ist das Doppelsitzventil In dieser unteren Stellung vorteilhaft geschlossen, so dass die Druckluftverbindung der Verbindungsleitung vom Vorratsluftbehälter zum Doppelsitzventil - beziehungsweise die dazu parallel geschaltete Leitung - von der Bremszylindervorsteuerkammer getrennt ist. In einer oberen Stellung der Kolbenstange mit den beiden Kolben ist das Doppelsitzventil geöffnet, die Bremszylindervorsteuerkammer durch den zweiten Kolben von der Umgebung abgetrennt, so dass Druckluft über das Doppelsitzventil in die Bremszylindervorsteuerkammer strömen kann.

Vorteilhaft ist das Doppelsitzventil als Stößelventit ausgebildet und in Schließrichtung mit einer Druckfeder und in Öffnungsrichtung durch die Kolbenstange des Steuerventils belastet. In einer weiteren vorteilhaften Ausführung der Erfindung ist auch das oben beschriebene Ventil, das die Verbindung zwischen Hauptluftleitung und Doppelsitzventil steuert, als Stößelventil ausgeführt. Vorteilhaft kann auch dieses in Schließrichtung mit einer Druckfeder und in Öffnungsrichtung durch die Kolbenstange belastet sein.

Das oben beschriebene, speziell ausgebildete Steuerorgan umfasst in einer vorteilhaften Ausführung der Erfindung eine Kolbenstange mit einer axialen Bohrung, einen Kolben, eine Trennwand, eine zweite Trennwand und ein Ventil. In der Kolbenstange ist ein Bypass zum Überbrücken der Trennwand ausgebildet. Auf der ventilzugewandten Seite des Kolbens ist vorteilhaft eine Druckluftverbindung zur Bremszylindervorsteuerkammer ausgebildet, und auf der ventilabgewandten Seite des Kolbens ist eine Vorrichtung zum Erzeugen einer Gegenkraft, vorteilhaft in Form einer Druckfeder, angeordnet. Der Druckluftanschluss für den Steuerdruck kann über das Ventil mit der Hauptluftleitung verbunden werden. Die Kolbenstange ist so angeordnet, dass sie vom Ventil durch die beiden Trennwände bis zum Kolben führt. Auf der ventilzugewandten Seite der Trennwand ist ein Anschluss zur Druckluftverbindung mit dem Steuerdruck ausgebildet, auf der ventilabgewandten Seite ist die Druckluftverbindung zur Steuerkammer angeschlossen. Die Druckluftverbindung zur Bremszylindervorsteuerkammer ist durch die zweite Trennwand von der Druckluftverbindung zur Steuerkammer getrennt

Besonders vorteilhaft ist auch hier das Ventil als ein in Schließrichtung mit einer Druckfeder und in Öffnungsrichtung durch die Kolbenstange belastetes Stößelventil ausgebildet.

In einer vorteilhaften Ausführung der Erfindung kann der Effekt des Druckaufbaus beziehungsweise des Druckabbaus in der Bremszylindervorsteuerkammer dadurch verstärkt werden, dass in die Verbindungsleitung zwischen Steuerventil und Bremszylindervorsteuerkammer eine druckluftleitende Verbindung zu einem weiteren Ventil - zur Unterscheidung im weiteren als Entlüftungsventil bezeichnet -, das gegenüber der Umgebung öffnet und schließt, eingebracht ist. Das Entlüftungsventil gibt zusätzlich den Durchgang zur Umgebung dann frei, wenn die Bremszylindervorsteuerkammer über die Umgebungsverbindung im Steuerventil bei einer unteren Stellung der Kolbenstange mit den beiden Kolben entlüftet wird. Besonders vorteilhaft ist daher das Entlüftungsventil gleichfalls als Stößelventil ausgebildet, in Öffnungsrichtung zumindest mittelbar belastet durch den Steuerdruck und in Schließrichtung insbesondere mit einer Druckfeder. Dabei kann das Entlüftungsventil im Wesentlichen den gleichen Aufbau wie das Ventil in der Parallelleitung zwischen dem Vorratsluftbehälter beziehungsweise dem Doppelsitzventil und der Hauptluftleitung haben, mit einem Kolben - belastet durch den Steuerdruck und andersseitig durch eine Vorrichtung zur Erzeugung einer Gegenkraft - und mit einer Kolbenstange, die das insbesondere durch die Druckfeder geschlossen gehaltene Ventil bei entsprechend hohem Steu-erdruck aufdrückt und somit die Verbindung der Bremszylindervorsteuerkammer zur Umgebung freigibt.

Besonders vorteilhaft können auch in die Druckluftverbindung zwischen Vorratsluftbehälter und Doppelsitzventil ein zusätzliches Ventil und/oder eine Drosselblende geschaltet sein. Weiterhin ist es vorteilhaft, die Druckluftverbindung von der Hauptluftleitung durch das Steuerorgan zur Steuerkammer besonders druckverlustbehaftet auszuführen, insbesondere durch die Gestaltung des Bypasses mit einem engen Strömungsquerschnitt. Weiterhin kann vorteilhaft in die Druckluftverbindung zwischen dem Steuerorgan und der Steuerkammer ein Ventil und/oder eine Drosselblende geschaltet sein. Die Vorteile der letztgenannten Ausführungen werden nachfolgend in der Beschreibung eines Bremsvorganges anhand eines erfindungsgemäßen Ausführungsbeispieles der Steuervorrichtung erläutert.

Die Erfindung sowie der Stand der Technik sollen nachfolgend anhand eines Ausführungsbeispieles und den beigefügten Zeichnungen näher erläutert werden. Weiterhin soll die Beschreibung eines Bremsvorganges die Funktionsweise der erfindungsgemäßen Vorrichtung klarstellen.

Es zeigen:
- Figur 1: ein Ausführungsbeispiel der erfindungsgemäßen Steuerungsvorrichtung.
- Figur 2: ein Ausführungsbeispiel des in Figur 1 als Blackbox dargestellten Steuerorgans.
- Figur3: ein Ausführungsbeispiel der erfindungsgemäßen Steuervorrichtung mit zusätzlichem Entlüftungsventil

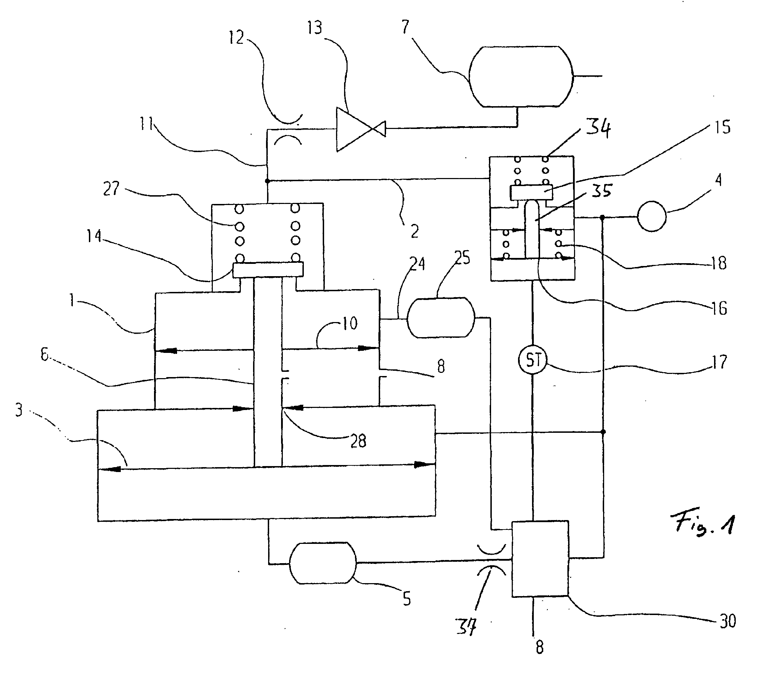

In Figur 1 ist das Steuerventil mit dem Gehäuse 1, in dem eine Kolbenstange 6, ein erster Kolben 3, ein zweiter Kolben 10 und ein Doppelsitzventil 14 angeordnet ist, erkennbar. Die eine Seite des Kolbens 3 ist über eine Druckluftverbindung mit der Hauptluftleitung 4 verbunden, die andere Seite ist über eine Druckluftverbindung an die Steuerkammer 5 angeschlossen. Der zweite Kolben 10 ist auf seiner einen Seite über eine Druckluftverbindung 24 mit einer Bremszylindervorsteuerkammer 25 verbunden. Die andere Seite des zweiten Kolbens 10 ist über die Bohrung 8 mit der Umgebung verbunden. Die benachbarten Druckräume der Kolben 3 und 10 sind durch eine Trennwand getrennt, durch welche die Kolbenstange 6 mit einer gleitenden Dichtung 28 geführt ist.

Das Doppelsitzventil 14 ist in Schließrichtung durch die Druckfeder 27 und in Öffnungsrichtung durch die Kolbenstange 6 belastet. Die kolbenabgewandte Seite des Doppelsitzventils 14 weist einen Anschluss für eine Druckluftverbindung 11 zum Vorratsluftbehälter 7 auf. In diese Druckluftverbindung 11 ist ein Ventil 13 und eine Drossel 12 geschaltet. Eine der Druckluftverbindung 11 parallel geschaltete Druckluftverbindung 2 verbindet das Ventil 15 mit dem Doppelsitzventil 14. Das Ventil 15 ist als Stößelventil ausgebildet, in Schließrichtung durch die Druckfeder 34 und in Öffnungsrichtung durch die Kolbenstange 35 belastet. Der auf der ventilabgewandten Seite der Kolbenstange 35 angeordnete Kolben 16 ist auf seiner ventilzugewandten Seite durch die Druckfeder 18 belastet, die andere Seite ist mit der Druckluftverbindung des Steuerdruckes 17 verbunden. Dabei ist das Ventil 15 in die Druckluftverbindung 2 von der Hauptluftleitung 4 zum Doppelsitzventil 14 geschaltet.

In die Verbindungsstelle zwischen den Druckluftleitungen der Steuerkammer 5, der Bremszylindervorsteuerkammer 25, der Hauptluftleitung 4, der Druckluftverbindung des Steuerdruckes 17 und der Umgebung ist das Steuerorgan 30 geschaltet.

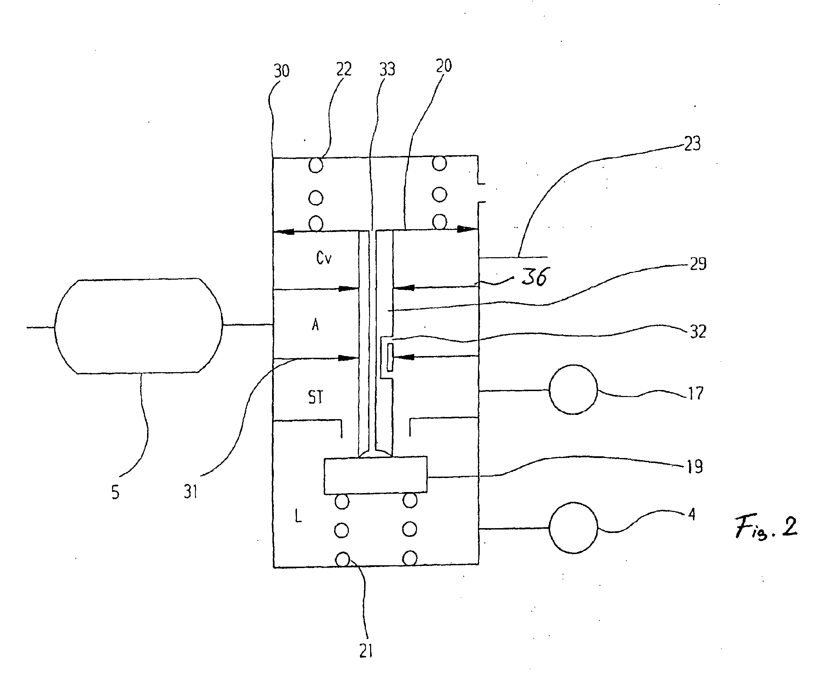

Wie aus Figur 2 ersichtlich, weist dabei das Steuerorgan 30 eine Kolbenstange 29 mit einer axialen Bohrung 33 auf, die auf der einen Seite mit einem Kolben 20 und auf der anderen Seite mit einem Ventil 19 versehen ist. Das Ventil 19 ist wiederum als Stößelventil ausgebildet, in Schließrichtung durch eine Druckfeder 21 und in Öffnungsrichtung durch die Kolbenstange 29 belastet. Der Kolben 20 ist auf seiner ventilabgewandten Seite durch eine Druckfeder 22 belastet und über eine Bohrung mit Umgebungsdruck beaufschlagt.

Durch das Ventil 19, die Trennwand 31, die zweite Trennwand 36 und den Kolben 20 ist das Steuerorgan 30 in fünf Druckräume aufgeteilt. Jeder Druckraum hat einen Anschluss für eine Druckluftverbindung. In axialer Richtung vom Ventil 19 bis zum Kolben 20 gesehen sind das die Verbindungen zur Hauptluftleitung 4, zum Druckluftanschluss für den Steuerdruck 17, zur Steuerkammer 5, zur Bremszylindervorsteuerkammer 25 und zur Umgebung. Ein Bypass 32 in der Kolbenstange 29 verbindet bei geeigneter Stellung der Kolbenstange 29 den Druckraum ST - mit dem Druckluftanschluss des Steuerdruckes 17 - mit dem Druckraum A - mit dem Anschluss der Druckluftverbindung zur Steuerkammer 5 -. Bei geöffnetem Ventil 19 ist der Druckraum L - mit dem Anschluss für die Hauptluftleitung 4 - mit dem Druckraum ST verbunden.

In die Druckluftverbindung zwischen Steuerorgan 30 und Steuerkammer 5 ist eine Drosselblende 37 geschaltet.

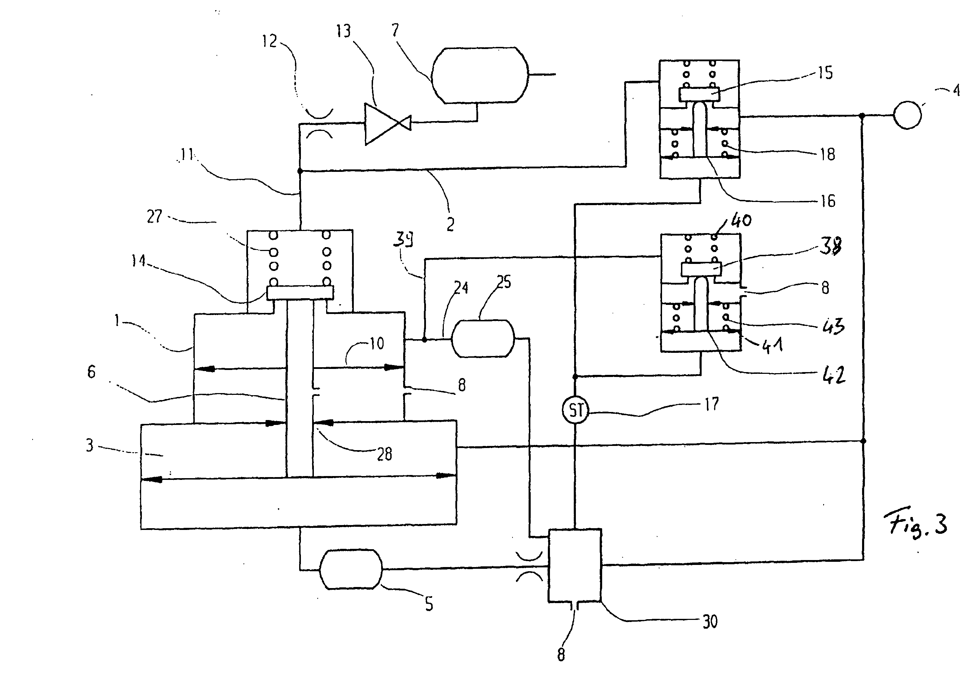

Figur 3 zeigt eine Ausführung gemäß Figur 2 mit zusätzlich eingebrachtem Entlüftungsventil 38 zur Verstärkung des Druckaufbaus beziehungsweise Druckabbaus in der Bremszylindervorsteuerkammer 25. Das Entlüftungsventil 38 ist über die Druckluftverbindung 39 mit der Druckluftverbindung 24 zwischen dem Steuerventil und der Bremszylindervorsteuerkammer 25 verbunden. Das Entlüftungsventil 38 verbindet im geöffneten Zustand die Bremszylindervorsteuerkammer 25 und die Umgebungsbohrung 8. In Schließrichtung ist das Entlüftungsventil 38 durch die Druckfeder 40 belastet und in Öffnungsrichtung über den mit Steuerdruck beaufschlagten Kolben 41 und die Kolbenstange 42. In Schließrichtung ist der Kolben 41 durch die Druckfeder 43 belastet.

Nachfolgend soll die Funktionsweise der in den Figuren 1 und 2 dargestellten Steuervorrichtung beim Bremsvorgang kurz beschrieben werden:

In der Bereitschaftsstellung des Steuerventils befindet sich die Kolbenstange 6 mit den Kolben 3 und 10 in einer unteren Position, bei der das Doppelsitzventil 14 die Druckluftverbindung von den Luftverbindungen 11 und 2 geschlossen und die Bremszylindervorsteuerkammer 25 entlüftet hält. Da infolgedessen der Druck Cv Null beziehungsweise ausreichend niedrig ist, befindet sich der Kolben 20 durch die Wirkung der Druckfeder 22 in einer unteren Position. Das Ventil 19 und der Bypass 32 sind geöffnet und die Hauptluftleitung 4, die Steuerkammer 5 und die Druckluftverbindung des Steuerdruckes 17 sind auf den gemeinsamen Regelbetriebsdruck aufgefüllt, da die Druckkammern L, ST und A druckluftführend verbunden sind.

Durch die Wirkung des Steuerdruckes 17 auf den Kolben 16 ist das Ventil 15 geöffnet, so dass die Hauptluftleitung 4 mit der Druckluftverbindung 2 verbunden ist, und der Druck aus der Hauptluftleitung 4 an dem Doppelsitzventil 14 anliegt. Dabei wird der Druck in der Druckluftverbindung 2 durch den Druck in der Hauptluftleitung 4 bestimmt, weil dieser in der Bereitschaftsstellung der Steuereinrichtung größer ist als der Druck, der sich allein durch den Druck im Vorratsluftbehälter 7 gedrosselt durch das Ventil 13 und die Drossel 12 in der Druckluftverbindung 11 beziehungsweise 2 ergeben würde. Eine ungewollte Rückströmung aus der Druckluftverbindung 2 über die Druckluftverbindung 11 in den Vorratsluftbehälter kann durch geeignete Ausführung des Ventils 13 vermieden werden. Der Druck im Vorratsluftbehälter kann so bemessen werden, dass sich nach Drosselung über Ventil 13 und Drossel 12 in der Druckluftverbindung 11 ein konstanter Druck von zum Beispiel 3,8 bar einstellen wird, solange dieser nicht durch einen höheren Druck in der Hauptluftleitung 4 bestimmt wird, beispielsweise durch 5 bar in der Bereitschaftsstellung.

Die Wirkungsweise des Bremsens kann in zwei Phasen eingeteilt werden. In Phase 1 wird zum Bremsen der Druck in der Hauptluftleitung 4 vermindert. Diese Verminderung kann langsam erfolgen, zum Beispiel um 0,1 bar je Sekunde. Da der Bypass 32 vorzugsweise im Sinne der Erfindung mit einem engen Querschnitt ausgeführt ist, kann der Druck in der Druckkammer A und damit in der Steuerkammer 5 dieser Druckabsenkung nur zeitlich verzögert folgen. Verstärkt werden kann dieser Effekt noch durch eine zwischen Steuerorgan 30 und Steuerkammer 5 eingebrachte Drosselblende 37. Gegebenenfalls kann dort auch ein Ventil eingefügt werden.

Die damit entstehende Druckdifferenz am Kolben 3 führt dazu, dass die Kolbenstange 6 nach oben bewegt wird. Damit unterbricht der Kolben 10 die Verbindung der Bremszylindervorsteuerkammer 25 zur Umgebungsbohrung 8, und das Doppelsitzventil 14 öffnet.

Jetzt strömt Druckluft aus der Verbindung 2 in die Bremszylindervorsteuerkammer 25. Da die Verbindung über das Ventil 15 zur Hauptluftleitung 4 noch geöffnet ist, strömt Druckluft aus der Hauptluftleitung 4 in die Bremszylindervorsteuerkammer 25. Die Einleitung der Bremsung bewirkt also eine sich selbst verstärkende Absenkung des Druckes in der Hauptluftleitung 4.

Dadurch, dass zu Bremsbeginn damit ein Druck zum Füllen der Bremszylindervorsteuerkammer 25 zur Verfügung gestellt wird, der größer ist als der üblicherweise durch den Vorratsluftbehälter 7 zur Verfügung gestellte Druck, kann in Kombination mit der sich selbst verstärkenden Druckabsenkung in der Hauptluftleitung 4 eine schnelle Fortpflanzung des pneumatischen Bremssignals von der Lokomotive zum Zugende und eine gleichmäßige Bremskraft aller Wagen erreicht werden.

Der sich in Phase 1 entwickelnde Druck in der Bremszylindervorsteuerkammer 25 bewirkt eine Bewegung des Kolbens 20 entgegen der Kraft der Druckfeder 22. In Phase 2 überschleift infolge dessen der Bypass 32 zunächst die gleitende Trennwand 31. Unmittelbar darauf schließt das Ventil 19 die Verbindung der Drücke L und ST, gleichzeitig beginnt die Absenkung des Druckes ST durch Ausströmen von Druckluft über die Bohrung 33 in der Kolbenstange 29.

Nach einer bestimmten Zeit ist der Druck in der Kammer ST so weit abgesunken, dass sich der Kolben 16 durch die Druckfeder 18 nach unten bewegt, und das Ventil 15 die Hauptluftleitung 4 von der Druckluftverbindung 2 trennt. Damit ist das Überströmen von Druckluft aus der Hauptluftleitung 4 in die Bremszylindervorsteuerkammer 25 beendet, die nachfolgende Absenkung des Druckes in der Hauptluftleitung 4 bis zur Voll- oder Schnellbremsung wird nicht weiter durch Ausströmen von Luft über das Ventil 15 verstärkt. Da das Doppelsitzventil 14 weiterhin geöffnet ist, wird sich der Druck in den Druckluftverbindungen 2 und 11 bis auf das durch den Vorratsluftbehälter 7 zur Verfügung gestellte Druckniveau absenken, zum Beispiel bis auf 3,8 bar. Die Füllgeschwindigkeit der Bremszylindervorsteuerkammer 25 kann dabei über das Ventil 13 beziehungsweise die Drossel 12 eingestellt werden.

Eine weitere Absenkung des Druckes in der Hauptluftleitung bis zur Vollbremsung beziehungsweise Schnellbremsung, zum Beispiel auf 3,5 bar beziehungsweise auf 0 bar, führt zu einer Verstärkung der Druckdifferenz über dem Kolben 3. Durch die Verschiebung der Kolbenstange 6 wird das Doppelsitzventil 14 entsprechend weit geöffnet, und die Bremszylindervorsteuerkammer 25 wird weiter gefüllt.

Mit der vorliegenden Erfindung ist es somit erstmals möglich, eine Steuervorrichtung für Druckluftbremsen anzugeben, die einen geringen Bauaufwand und eine geringe Baugröße aufweist. Bei einem Einsatz für Zugbremsen führt der erfindungsgemäße Aufbau der beschriebenen Steuervorrichtung zu einer hohen Durchschlagsgeschwindigkeit aufgrund der Rückwirkung des Druckaufbaus im Bremszylinder beziehungsweise in der Bremszylindervorsteuerkammer auf den Druck in der Hauptluftleitung und damit zu einer gleichzeitigen Bremswirkung in allen Wagen. Durch eine zunächst schnelle, dann langsamere Druckerhöhung in den Bremszylindern wird eine gleichmäßige Bremskraft für alle Wagen erzielt.

### Bezugszeichenliste

- 1: Steuerventilgehäuse
- 2: Druckluftverbindung
- 3: Kolben
- 4: Hauptluftleitung
- 5: Steuerkammer
- 6: Kolbenstange
- 7: Vorratsluftbehälter
- 8: Umgebungsbohrung
- 9: Trennwand
- 10: zweiter Kolben
- 11: Druckluftverbindung
- 12: Drossel
- 13: Ventil
- 14: Doppelsitzventil
- 15: Ventil
- 16: Kolben
- 17: Steuerdruck
- 18: Druckfeder
- 19: Ventil
- 20: Kolben
- 21: Druckfeder
- 22: Druckfeder
- 23: Druckluftverbindung zur Bremszylindervorsteuerkammer
- 24: Druckluftverbindung
- 25: Bremszylindervorsteuerkammer
- 27: Druckfeder
- 28: Dichtung
- 29: Kolbenstange
- 30: Steuerorgan
- 31: Trennwand
- 32: Bypass
- 33: axiale Bohrung
- 34: Druckfeder
- 35: Kolbenstange
- 36: zweite Trennwand
- 37: Drosselblende
- 38: Entlüftungsventil
- 39: Druckluftverbindung
- 40: Druckfeder
- 41: Kolben
- 42: Kolbenstange
- 43: Druckfeder

## Patentansprüche

1. Steuervorrichtung für Druckluftbremsen
mit einem
ein Gehäuse (1),
eine Kolbenstange (6),
einen Kolben (3),
einen zweiten Kolben (10), und
ein Doppelsitzventil (14) umfassenden Steuerventil; und weiter mit einem Steuerorgan (30);
mit einem Vorratsluftbehälter (7);
mit einer Steuerkammer (5);
mit einer Hauptluftleitung (4); wobei
eine Seite des Kolbens (3) druckluftführend mit der Hauptluftleitung (4) verbunden ist;
die andere Seite des Kolbens (3) druckluftführend mit der Steuerkammer (5) verbunden ist;
eine Seite des zweiten Kolbens (10) eine Druckluftverbindung (24) zu einem Bremszylinder oder einer Bremszylindervorsteuerkammer (25) hat; und
das Doppelsitzventil (14) zwischen eine Druckluftverbindung (11) von dem Vorratsluftbehälter (7) und die Druckluftverbindung (24) geschaltet ist;
**gekennzeichnet durch** die folgenden Merkmale:
der Druckluftverbindung (11) ist eine Druckluftverbindung (2) von der Hauptluftleitung (4) zum Doppelsitzventil (14) parallel geschaltet;
in die Druckluftverbindung (2) ist ein Ventil (15) umfassend eine Kolbenstange (35) und einen Kolben (16) geschaltet;
der Kolben (16) weist auf der einen Seite einen Druckluftanschluss für einen Steuerdruck (17) auf;
der Kolben (16) weist auf der anderen Seite eine Vorrichtung zum Erzeugen einer Gegenkraft, insbesondere eine Druckfeder (18) auf;
in die Verbindungsstelle zwischen der Hauptluftleitung (4), der Steuerkammer (5), dem Druckluftanschluss für den Steuerdruck (17), dem Bremszylinder oder der Bremszylindervorsteuerkammer (25) und der Umgebung ist ein Steuerorgan (30) geschaltet.

2. Vorrichtung gemäß Anspruch 1, **dadurch gekennzeichnet, dass** das Doppelsitzventil (14) als ein in Schließrichtung mit einer Druckfeder (27) und in Öffnungsrichtung durch die Kolbenstange (6) belastetes Stößelventil ausgebildet ist.

3. Vorrichtung gemäß einem der Ansprüche 1 bis 2, **dadurch gekennzeichnet, dass** das Ventil (15) als ein in Schließrichtung mit einer Druckfeder (34) und in Öffnungsrichtung durch die Kolbenstange (35) belastetes Stößelventil ausgebildet ist.

4. Vorrichtung gemäß einem der Ansprüche 1 bis 3, **dadurch gekennzeichnet, dass** das Steuerorgan (30)
eine Kolbenstange (29) mit einer axialen Bohrung (33)
einen Kolben (20)
eine Trennwand (31)
eine zweite Trennwand (36) und
ein Ventil (19) umfasst;
in der Kolbenstange (29) ein Bypass (32) zum möglichen Überbrücken der Trennwand (31) ausgebildet ist;
auf der ventilzugewandten Seite des Kolbens (20) eine Druckluftverbindung zum Bremszylinder bzw. der Bremszylindervorsteuerkammer (25) ausgebildet ist;
auf der ventilabgewandten Seite des Kolbens (20) eine Vorrichtung zum Erzeugen einer Gegenkraft, insbesondere eine Druckfeder (22) angeordnet ist;
der Druckluftanschluss für den Steuerdruck (17) über das Ventil (19) mit der Hauptluftleitung (4) verbunden ist;
die Kolbenstange vom Ventil (19) durch die Trennwand (31) und die zweite Trennwand (36) bis zum Kolben (20) führt ;
auf der ventilzugewandten Seite der Trennwand (31) der Anschluss zur Druckluftverbindung mit dem Steuerdruck (17) ausgebildet ist ;
auf der ventilabgewandten Seite der Trennwand (31) die Druckluftverbindung zur Steuerkammer (5) angeschlossen ist
die Druckluftverbindung zum Bremszylinder bzw. zur Bremszylindervorsteuerkammer durch die zweite Trennwand (36) von der Druckluftverbindung zur Steuerkammer (5) getrennt ist.

5. Vorrichtung gemäß Anspruch 4, **dadurch gekennzeichnet, dass** das Ventil (19) als ein in Schließrichtung mit einer Druckfeder (21) und in Öffnungsrichtung durch die Kolbenstange (29) belastetes Stößelventil ausgebildet ist.

6. Vorrichtung gemäß einem der Ansprüche 1 bis 5, **dadurch gekennzeichnet, dass** in die Druckluftverbindung (12) ein Ventil (13) und oder eine Drosselblende (12) geschaltet ist.

7. Vorrichtung gemäß einem der Ansprüche 1 bis 6, **dadurch gekennzeichnet, dass** die Druckluftverbindung von der Hauptluftleitung (4) durch das Steuerorgan (30) zur Steuerkammer (5) besonders druckverlustbehaftet ausgeführt ist, insbesondere durch die Ausführung des Bypasses (32) mit einem engen Strömungsquerschnitt, so dass einem Druckabfall in der Hauptluftleitung (4) ein Druckabfall in der Steuerkammer (5) zeitlich verzögert erfolgt.

8. Vorrichtung gemäß einem der Ansprüche 1 bis 7, **dadurch gekennzeichnet, dass** in die Druckluftverbindung zwischen dem Steuerorgan (30) und der Steuerkammer (5) ein Ventil und/oder eine Drosselblende (37) geschaltet ist.

9. Vorrichtung gemäß einem der Ansprüche 1 bis 8, **dadurch gekennzeichnet, dass** zwischen die Druckluftverbindung (24) und die Umgebung eine Druckluftverbindung (39) mit einem Entlüftungsventil (38) geschaltet ist.

10. Vorrichtung gemäß Anspruch 9, **dadurch gekennzeichnet, dass** das Entlüftungsventil (38) als ein in Öffnungsrichtung wenigstens mittelbar durch den Steuerdruck belastetes Stößelventil ausgebildet ist.

## Revendications

1. Dispositif de commande de freins à air comprimé comprenant
un boîtier (1),
une tige (6) de piston,
un piston (3),
un deuxième piston (10), et
une soupape (14) à double siège comprenant une soupape de commande ; et en outre
un organe (30) de commande ;
un réservoir (7) d'air ;
une chambre (5) de commande ;
un conduit (4) principal d'air ;
dans lequel
un côté du piston (3) communique pour le passage d'air comprimé avec le conduit (4) principal d'air ; l'autre côté du piston (3) communique pour le passage d'air comprimé avec la chambre (5) de commande ; un côté du deuxième piston (10) a une communication (24) pour de l'air comprimé avec un cylindre de frein ou avec une chambre (25) pilote de cylindre de frein ; et
la soupape (14) à double siège est montée entre une communication (11) pour l'air comprimé partant du réservoir (7) d'air et la communication (24) pour l'air comprimé ;
**caractérisé par** les caractéristiques suivantes :
une communication (2) pour l'air comprimé allant du conduit (4) principal d'air à la soupape (14) à double siège est montée en parallèle à la communication (11) pour l'air comprimé ;
une soupape (15) comprenant une tige (35) de piston et un piston (16) est montée dans la communication (2) pour l'air comprimé ;
le piston (16) a, d'un côté, un raccord d'air comprimé pour une pression (17) de commande ;
le piston (16) a, de l'autre côté, un dispositif de production d'une force antagoniste, notamment un ressort (18) de compression ;
un organe (30) de commande est monté au point de liaison entre le conduit (4) principal d'air, la chambre (5) de commande, le raccord d'air comprimé pour la pression (17) de commande, le cylindre de frein ou la chambre (25) pilote de cylindre de frein et l'atmosphère ambiante.

2. Dispositif suivant la revendication 1, **caractérisé en ce que** la soupape (14) à double siège est constituée sous la forme d'une soupape à poussoir soumise dans le sens de la fermeture à l'action d'un ressort (27) de compression et dans le sens de l'ouverture à l'action de la tige (6) de piston.

3. Dispositif suivant l'une des revendications 1 à 2, **caractérisé en ce que** la soupape (15) est constituée sous la forme d'une soupape à poussoir soumise dans le sens de fermeture à l'action d'un ressort (34) de compression et dans le sens de l'ouverture à l'action de la tige (35) de piston.

4. Dispositif suivant l'une des revendications 1 à 3, **caractérisé en ce que** l'organe (30) de commande comprend
une tige (29) de piston ayant un alésage (33) axial ;
un piston (20) ;
une cloison (31) ;
une deuxième cloison (36) ; et
une soupape (19) ;
une dérivation (32) pour enjamber éventuellement la cloison (31) est constituée dans la tige (29) de piston ;
une communication d'air comprimé allant au cylindre de frein ou à la chambre (25) pilote de cylindre de frein est constituée du côté du piston (20), qui est tourné vers la soupape ;
un dispositif de production d'une force antagoniste, notamment un ressort (22) de compression, est monté du côté du piston (20), qui est éloigné de la soupape ;
le raccord d'air comprimé pour la pression (17) de commande communique par la vanne (19) avec le conduit (4) principal d'air ;
la tige de piston va de la vanne (19) au piston (20) en passant à travers la cloison (31) et la deuxième cloison (36) ;
le raccord pour la communication d'air comprimé ayant la pression (17) de commande est constitué du côté de la cloison (31) qui est tournée vers la soupape ;
la communication d'air comprimé vers la chambre (5) de commande est raccordée du côté de la cloison (31), qui est éloigné de la soupape ;
la communication d'air comprimé allant au cylindre de frein ou à la chambre pilote de cylindre de frein est séparée par la deuxième cloison (36) de la communication d'air comprimé allant à la chambre (5) de commande.

5. Dispositif suivant la revendication 4, **caractérisé en ce que** la soupape (19) est constituée sous la forme d'une soupape à poussoir soumise dans le sens de la fermeture à l'action d'un ressort (21) de compression et dans le sens de l'ouverture à l'action de la tige (29) de piston.

6. Dispositif suivant l'une des revendications 1 à 5, **caractérisé en ce qu'**une soupape (13) et/ou un diaphragme d'étranglement (12) est montée dans la communication (12) d'air comprimé.

7. Dispositif suivant l'une des revendications 1 à 6, **caractérisé en ce que** la communication d'air comprimé allant du conduit (4) principal d'air à la chambre (5) de commande en passant par l'organe (30) de commande est réalisée d'une manière soumise particulièrement à une perte de charge, notamment en réalisant la dérivation (32) en lui donnant une section transversale d'écoulement étroite, de sorte qu'une perte de charge dans la chambre (5) de commande suit de façon retardée dans le temps une perte de charge dans le conduit (4) principal d'air.

8. Dispositif suivant l'une des revendications 1 à 7, **caractérisé en ce qu'**une vanne et/ou un diaphragme (37) d'étranglement est montée dans la communication d'air comprimé entre l'organe (30) de commande et la chambre (5) de commande.

9. Dispositif suivant l'une des revendications 1 à 8, **caractérisé en ce qu'**une communication (39) d'air comprimé ayant une soupape (38) de mise à l'atmosphère est montée entre la communication (24) d'air comprimé et l'atmosphère.

10. Dispositif suivant la revendication 9, **caractérisé en ce que** la soupape (38) de mise à l'atmosphère est constituée sous la forme d'une soupape à poussoir soumise dans le sens de l'ouverture au moins indirectement à l'action de la pression de commande.

## Claims

1. Control device for pneumatic brakes, comprising
a device (1),
a piston rod (6),
a piston (3),
a second piston (10) and
a control valve including a double-seated valve (14); and furthermore
a control element (30);
a supply air reservoir (7);
a control chamber (5);
a brake pipe (4); wherein
one side of said piston is connected to said brake pipe (4) for passing compressed air;
the other side of said piston (3) is connected to said control chamber (5) for passing compressed air;
one side of said second piston (10) comprises a pneumatic connector (24) for connection to a brake cylinder or a brake cylinder pilot control chamber (25); and
said double-seated valve (14) is connected between a pneumatic connector (11) of said supply air reservoir (7) and said pneumatic connector (24);
**characterised by** the following features:
said pneumatic connector (11) is a pneumatic connection line (2) connected in parallel from said brake pipe (4) to said double-seated valve (14);
a valve (15) including a piston rod (35) and a piston (16) is connected into said pneumatic connection line (2);
said piston (16) comprises a pneumatic connector for a control pressure (17) on a first side;
said piston (16) comprises a device for generating a counter-acting force on the other side, in particular a compression spring (18);
a control element (30) is connected in the connecting site between said brake pipe (4), said control chamber (5), said pneumatic connector for the control pressure (17), said brake cylinder or said brake cylinder pilot control chamber (25) and the environment.

2. Device according to Claim 1, **characterised in that** said double-seated valve (14) is configured as a tappet-type valve biased by a compression spring (27) in the closing direction and by said piston rod (6) in the opening direction.

3. Device according to any of the Claims 1 to 2, **characterised in that** said valve (15) is configured as a tappet-type valve biased by a compression spring (34) in the closing direction and by said piston rod (35) in the opening direction.

4. Device according to any of the Claims 1 to 3, **characterised in that** said control element (30) comprises
a piston rod (29) with an axial bore (33),
a piston (20),
a partitioning wall (31),
a second partitioning wall (36) and
a valve (19);
that a by-pass (32) is formed in said piston rod (29) for possible bypassing of said partitioning wall (31);
that a pneumatic line for connection to the brake cylinder or the brake cylinder pilot control chamber (25), respectively is formed on that side of said piston (20), which faces the valve;
that a device for generating a counteracting force is disposed on that side of said piston (20), which is turned away from said valve, particularly a compression spring (22);
that said pneumatic connector for the control pressure (17) is connected via said valve (19) to said brake pipe (4);
that said piston rod leads from said valve (19) through said partitioning wall (31) and said second partitioning wall (36) to said piston (20);
that said connector for pneumatic connection to the control pressure (17) is formed on that side of the partitioning wall (31), which faces said valve;
that said pneumatic connector for connection to said control chamber (5) is connected on that side of the partitioning wall (31), which is turned away from said valve,
and that the pneumatic connector for connection to the brake cylinder or to the brake cylinder pilot control chamber, respectively, is separated by said second partitioning wall (36) from the pneumatic connection to said control chamber (5).

5. Device (1) according to Claim 4, **characterised in that** said valve (19) is configured as a tappet-type valve biased by a compression spring (21) in the closing direction and by said piston rod (29) in the opening direction.

6. Device according to any of the Claims 1 to 5, **characterised in that** a valve (13) or an orifice plate (12) is interposed into said pneumatic connection line (12).

7. Device according to any of the Claims 1 to 6, **characterised in that** the pneumatic connection from said brake pipe (4) is configured for particular high inherent pressure loss through said control element (30) to said control chamber (5), specifically by the configuration of said by-pass (32) with a narrow flow cross-section so that a pressure drop in said brake pipe (4) is followed by a pressure drop in said control chamber (5) with a delay.

8. Device according to any of the Claims 1 to 7, **characterised in that** a valve and/or an orifice plate (37) is/are interposed in said pneumatic connection between said control element (30) and said control chamber (5).

9. Device according to any of the Claims 1 to 8, **characterised in that** a pneumatic connection line (39) with a venting valve (38) is interposed between said pneumatic connector (24) and the environment.

10. Device according to Claim 9, **characterised in that** said venting valve (38) is configured as a tappet-type valve biased at least indirectly by the control pressure in the opening direction.
